**Europäisches Patentamt**

**European Patent Office**

**Office européen des brevets**

(19)

(11) **EP 1 341 321 A1**

(12) # DEMANDE DE BREVET EUROPEEN

(43) Date de publication:
**03.09.2003 Bulletin 2003/36**

(51) Int Cl.7: **H04B 7/185**, H04Q 7/36

(21) Numéro de dépôt: **03290208.2**

(22) Date de dépôt: **28.01.2003**

(84) Etats contractants désignés:
**AT BE BG CH CY CZ DE DK EE ES FI FR GB GR HU IE IT LI LU MC NL PT SE SI SK TR**
Etats d'extension désignés:
**AL LT LV MK RO**

(30) Priorité: **28.02.2002 FR 0202549**

(71) Demandeur: **ALCATEL**
**75008 Paris (FR)**

(72) Inventeurs:
• **Landes, Eric**
**31400 Toulouse (FR)**

• **Authie, Gérard**
**31077 Toulouse Cedex 4 (FR)**
• **Roussel, Fabienne**
**92250 La Garenne-Colombes (FR)**
• **Ereau, Jean-François**
**31000 Toulouse (FR)**

(74) Mandataire: **Smith, Bradford Lee**
**Compagnie Financière Alcatel,**
**Département de Propriété Industrielle,**
**5, rue Noel Pons**
**92734 Nanterre Cedex (FR)**

(54) **Procédé d'affectation de ressources variables dans le temps pour assurer des services continus et application de ce procédé à la planification d'un système de télécommunication**

(57)     L'invention concerne un procédé de planification des liens de communication, dans un système de télécommunications comprenant une pluralité de cellules à l'intérieur de chacune desquelles se trouve une station de base. Les communications sont effectuées par l'intermédiaire des stations de base et d'équipements de retransmission se trouvant dans une constellation de satellites, chacun de ces satellites disposant d'une pluralité d'antennes et chacune de ces antennes étant susceptible de rester pointée vers une station de base. La continuité des communications pour chaque station de base est assurée par commutation de ces communications d'un satellite vers un autre satellite.

Pour planifier, sur un temps déterminé, les liens de communication, on utilise des graphes d'intervalles pour les stations de base, chaque noeud ($S_1$, $S_2$) d'un graphe étant un intervalle d'utilisation potentielle d'équipement à bord d'un satellite et chaque arête ($a_{23}$) étant un couple d'intervalles présentant des parties en recouvrement temporel.

FIG_2a

EP 1 341 321 A1

## Description

L'invention est relative à un procédé d'affectation de ressources variables dans le temps afin d'assurer des services continus. Elle concerne plus particulièrement un tel procédé destiné à la planification des liens de communication dans un système de télécommunication par satellites défilants.

Dans la présente description on se référera principalement à un procédé de planification des liens de communication dans un système de télécommunication à constellation de satellites à orbite basse, donc défilants, et on décrira également ensuite de façon plus succincte, d'autres applications de ce procédé de planification.

Le procédé de planification s'applique plus particulièrement à un système de télécommunication dans lequel le globe terrestre est divisé en zones ou cellules dont chacune a un rayon de l'ordre de plusieurs centaines de kilomètres et à l'intérieur de chaque cellule on prévoit une station de base. Les terminaux de chaque cellule communiquent avec les autres terminaux de cette cellule, ou avec les terminaux des autres cellules, ou encore avec d'autres systèmes de télécommunication, par l'intermédiaire de la station de base affectée à la cellule concernée. Toutes les communications sont transmises par l'intermédiaire de satellites défilants. Pour fixer les idées on considérera le système dit « Skybridge » dont un premier développement a été décrit dans un article intitulé « Skybridge : réseau multimédia haute vitesse par satellite. », P. Sourisse et H. Sorre, Revue de l'électricité et de l'électronique, 11:49-52, décembre 1997. Dans un développement ultérieur de ce système, on prévoit plusieurs centaines de stations de base et 80 satellites défilants formant une constellation de Walker.

Dans un tel système de télécommunication, étant donné que chaque satellite n'est en vue d'une cellule que pendant une durée limitée, par exemple de l'ordre de 15 à 20 minutes, quand un satellite s'apprête à quitter la zone de vision de la cellule il est indispensable qu'un autre satellite soit disponible et prêt à prendre le relais de la communication afin de ne pas interrompre le service. C'est pourquoi la constellation est telle qu'à chaque instant plusieurs satellites sont visibles de chaque cellule. En outre, le satellite qui doit prendre le relais de la communication doit être aussi visible simultanément avec le précédent pendant un temps suffisant pour permettre la commutation, ou « Handover ».

Au surplus on considérera un système, comme le système Skybridge, dans lequel à bord de chaque satellite on prévoit un nombre limité d'antennes qui sont de type actif et commandées de façon telle qu'elles puissent servir les cellules auxquelles elles sont affectées malgré le déplacement du satellite par rapport à la cellule concernée. Dans ces conditions quand une antenne à bord d'un satellite arrive à la fin de son temps d'affectation à une cellule, cette antenne n'est pas immédiatement disponible car il faut un temps minimum, dit temps de ralliement, pour que cette antenne soit repointée vers une autre cellule.

De même, les antennes des stations de base suivent les satellites correspondants. Elles doivent donc aussi observer un temps de ralliement.

Quand un système de télécommunication de ce type a été installé avec une pluralité de satellites et une pluralité de cellules, c'est-à-dire de stations de bases, il faut planifier l'ensemble des connexions, ou liens, de façon telle que les liens requis par chaque station de base et chaque cellule soient en permanence réalisés à l'aide d'un satellite. Cette planification est théoriquement possible en raison du caractère déterministe des orbites des satellites. Toutefois le nombre élevé de satellites et de stations de base et les contraintes indiquées ci-dessus ont pour conséquence que cette planification ne constitue pas un problème facile à résoudre. En outre la difficulté est accrue si le nombre de contraintes imposées au système augmente. Une contrainte supplémentaire est notamment la suivante :

Il est préférable de limiter le nombre de commutations d'un satellite à un autre car cette commutation impose de mobiliser deux satellites simultanément et nécessite une signalisation ; et le nombre de mouvements des antennes dans les satellites doit être limité car ces mouvements limitent la durée de vie de ces dernières.

Il est également préférable que chaque station de base dispose d'au moins un lien qui soit en permanence réalisé à l'aide d'un satellite.

Le problème est rendu encore plus complexe à résoudre quand le système subit des dégradations telles que la perte d'un satellite, des pannes des antennes des transpondeurs et/ou des répéteurs. La solution du problème peut encore être compliquée par les variations de trafic, ces variations pouvant être soit permanentes, par exemple du fait d'une demande accrue d'une ou plusieurs cellules, soit périodiques, par exemple en raison de variations journalières du trafic de communications.

Afin de bien situer l'ampleur du problème à résoudre, on considère à titre d'illustration un cycle de dix heures et demie pour un système en régime permanent et sans variation de trafic. On rappelle que le but à atteindre est d'assurer que chacun des liens demandés par chaque station de base soit en permanence réalisé à l'aide d'un satellite. Pendant cette période chacune des stations de base est connectée en moyenne à 100 satellites. Dans le cas d'un scénario de fin de vie comprenant de nombreuses stations, un calcul simple montre que si, en plus des contraintes mentionnées ci-dessus, on tient compte des contraintes liées aux porteuses, la planification d'un tel système entraîne la considération de 400 000 variables booléennes devant satisfaire 4 000 000 de contraintes.

L'invention part de la constatation que ce problème peut se résoudre à l'aide d'algorithmes mathématiques et qu'il n'est pas possible de trouver une solution optimale, mais des solutions approchées à ce problème complexe.

L'invention apporte une solution particulièrement simple au problème de planification.

Elle est basée sur l'utilisation de graphes d'intervalles pour les stations de base et/ou pour les satellites.

Les intervalles considérés sont les intervalles de visibilité d'un satellite pour une cellule. Un graphe d'intervalle consiste à remplacer chaque intervalle de temps par un point appelé noeud et à tracer des arêtes entre noeuds si ces intervalles présentent des éléments communs. Pour que chaque station de base établisse sa (ses) connexion(s) (ou lien logique) continue sur une période déterminée (par exemple une dizaine d'heures) il faut établir, pour chaque lien logique requis, au moins un chemin (succession de noeuds et d'arêtes) du premier au dernier intervalle d'utilisation potentielle d'un satellite, c'est-à-dire du premier au dernier noeud.

Comme il existe une multiplicité de chemins possibles pour chaque station de base et que chaque chemin entraîne la mobilisation d'une ressource, c'est-à-dire une antenne d'un satellite, qui est alors indisponible pour les autres stations de base, le chemin (ou les chemins) choisi(s) pour la station de base doit être tel qu'il n'empêche pas l'établissement d'un chemin pour les autres stations de base.

Un premier aspect de l'invention concerne les situations où il est nécessaire qu'une station de base puisse faire appel à plusieurs liens logiques au cours d'une même période de temps, c'est-à-dire aux stations de base pour des cellules dans lesquelles le trafic est important. Selon ce premier aspect, quand une station de base doit établir plusieurs liens logiques simultanément sur une même période de temps on fait appel à des liens logiques du type noeuds-disjoints, c'est-à-dire à des liens logiques ne présentant aucun noeud en commun, sauf, bien entendu, les noeuds (ou intervalles) de début et de fin.

Autrement dit, dans ce cas, on interdit que deux liens logiques utilisent un même intervalle de temps ou créneau d'utilisation potentielle d'une antenne d'un satellite même si ces utilisations potentielles sont effectuées à des instants séparés dans le temps.

Dans ces conditions, à chaque fois qu'un satellite peut être utilisé pour le lien logique pour la cellule considérée l'antenne n'est utilisée qu'une seule fois, et non pas plusieurs fois. Il en résulte une minimisation du nombre de commutations.

En outre le choix de chemins noeuds-disjoints permet de s'appuyer principalement sur les graphes d'intervalles car s'il fallait partager un intervalle en plusieurs parties le graphe d'intervalle ne pourrait pas être utilisé car, rappelons-le, dans un graphe un intervalle est un point, c'est-à-dire un élément non divisible.

Selon un second aspect de l'invention, qui peut s'utiliser quel que soit le nombre de liens logiques à effectuer simultanément pour une station de base, la recherche de L (L ≥ 1) chemins noeuds-disjoints s'effectue de la manière suivante :

- Pour chaque station de base on détermine, d'une part, l'ensemble des intervalles (c'est-à-dire des noeuds dans un graphe) qui sont obligatoirement empruntés par un des L chemins noeuds-disjoints recherchés, de tels noeuds étant appelés des L-points d'articulation.

  On détermine aussi les arêtes, c'est-à-dire les commutations, qui sont obligatoirement empruntées par un des L chemins noeuds-disjoints, ces arêtes ou commutations étant appelées des L-ponts.

- Pour chaque L-point d'articulation déterminé, on réserve pendant un temps minimal une antenne du satellite correspondant, et pour chaque L-pont déterminé (d'un satellite dit sortant vers un satellite dit entrant), toute commutation depuis le satellite sortant est interdite excepté vers le satellite entrant, tandis que toute commutation vers le satellite entrant est interdite excepté depuis le satellite sortant.

Dans le mode de réalisation préféré de l'invention les L-points d'articulations sont déterminés de la façon suivante :

Dans chaque station de base on détermine au début et à la fin de chaque intervalle de temps (on rappelle qu'un intervalle de temps est l'intervalle de visibilité du satellite au-dessus de la cellule) le nombre de satellites qui sont vus de la cellule, ce nombre étant appelé densité, on recherche les suites de densités de type L+1, L, L+1, et on attribue le caractère de L-point d'articulation aux intervalles de temps qui se trouvent entièrement compris dans la densité L.

La suite des densités peut également être utilisée pour détecter les L-ponts. Dans ce cas, pour cette détection, on recherche les suites de densités L, L+1, L. Une telle suite correspond soit à l'apparition et à la disparition d'un même intervalle de visibilité, soit à une commutation. Dans ce dernier cas, on attribue le caractère de L-pont (ou commutation L-obligatoire) à la commutation se trouvant dans un segment temporel L,L+1,L et correspondant à la commutation depuis l'intervalle de temps qui se termine dans ce segment vers des intervalles de temps restants dans ce segment.

Cette détermination des L-points d'articulations et des L-ponts, c'est-à-dire la détermination des antennes de satellites à réserver pour l'établissement de liens logiques grâce à la recherche des suites particulières de densité, constitue un moyen particulièrement rapide, simple et efficace.

Selon une réalisation, pour continuer la détermination des liens logiques, après avoir réservé (grâce aux graphes d'intervalles de cellules) provisoirement les L-points d'articulations et les L-ponts, pour chaque satellite on considère, sur la période considérée, l'ensemble des intervalles de visibilité des stations de base et on réserve pour chaque station de base vue du satellite une antenne de ce satellite pendant tout ou partie de l'intervalle d'utilisation potentielle, et on détermine les stations de bases qui ne peuvent être servies par les satellites considérés en raison de la mobilisation de toutes les antennes de ce satellite pour d'autres stations de base.

Quand le satellite est « saturé » (toutes les antennes sont utilisées) le satellite concerné ne peut plus utiliser les créneaux de visibilité pendant cette saturation.

Ensuite, pour le graphe de la station de base comportant un créneau de visibilité ainsi élagué, on détermine de nouveau la suite des densités. Etant donné que cette suite est modifiée par l'élagage on peut alors retrouver d'autres L-points d'articulations et d'autres L-ponts.

On voit que, de cette manière, par propagation : en allant des graphes de satellites aux graphes de stations de base et réciproquement on obtient à chaque fois des réservations de ressources qui permettent de se rapprocher d'une solution satisfaisante.

Pour obtenir une solution il faut encore imposer d'autres contraintes. Par exemple on privilégie le lien logique de plus grande priorité (par exemple la cellule correspondant au plus grand trafic), et on détermine en premier lieu la succession de liens physiques nécessaires (réservations d'antennes de satellites) pour obtenir un lien logique continu.

Pour faciliter la sélection on peut également imposer d'autres critères tels que celui consistant à privilégier les liens de plus grande durée d'utilisation potentielle et/ou les liens induisant la plus grande capacité résiduelle.

La première solution trouvée, dite solution initiale, ne sera pas en général satisfaisante car elle fournira des liens logiques admissibles et des liens logiques inadmissibles, c'est-à-dire présentant des coupures.

Selon un mode de réalisation, pour minimiser, voire annuler, le nombre de liens logiques coupés, on utilise un procédé méta heuristique comprenant une étape d'intensification et une étape de diversification.

Ainsi, l'invention concerne un procédé de planification des liens de communication, dans un système de télécommunications comprenant une pluralité de cellules à l'intérieur de chacune desquelles se trouve une station de base, les communications étant effectuées par l'intermédiaire des stations de base et d'équipements de retransmission se trouvant dans une constellation de satellites, chacun de ces satellites disposant d'une pluralité d'antennes et chacune de ces antennes étant susceptible de rester pointée vers une station de base quand le satellite est en vue de cette dernière, la continuité des communications pour chaque station de base étant assurée par commutation de ces communications de l'équipement d'un satellite vers les équipements d'un autre satellite.

Ce procédé est caractérisé en ce que :

- pour planifier, sur un temps déterminé, dit temps de programmation, les liens de communication, on utilise des graphes d'intervalles pour les stations de base, chaque noeud d'un graphe étant un intervalle d'utilisation potentielle d'équipement à bord d'un satellite et chaque arête étant un couple d'intervalles présentant des parties en recouvrement temporel, et

- dans les graphes pour des stations de base nécessitant un nombre L, au moins égal à deux, de liens de communication par des satellites différents, on détermine ces liens de communication en recherchant L chemins noeuds-disjoints.

Selon une réalisation, pour déterminer les L chemins noeuds-disjoints, dans les graphes d'intervalles pour les stations de base, on identifie les noeuds, appelés L-obligatoires, qui sont obligatoirement empruntés par au moins l'un des L chemins noeuds-disjoints.

Dans ce cas, il est avantageux d'identifier les noeuds L-obligatoires de la manière suivante : pour chaque station de base, après chaque début et chaque fin d'intervalle d'utilisation potentielle d'équipements de chaque satellite, on détermine le nombre (d) de tels intervalles d'utilisation potentielle pour la station, ce nombre étant appelé densité, et on recherche les suites de densités de la forme L+1, L, L+1, les noeuds L-obligatoires étant constitués par les intervalles d'utilisation potentielle qui ne se terminent pas ou ne commencent pas quand la densité est L dans cette suite.

Dans un mode de réalisation, pour déterminer L chemins noeuds-disjoints pour une station de base, on identifie les arêtes, dites commutations L-obligatoires, qui sont obligatoirement empruntées par au moins un des chemins noeuds-disjoints. Dans ce cas, pour identifier les commutations L-obligatoires, on peut procéder de la façon suivante : pour chaque station de base, après chaque début et chaque fin d'intervalle d'utilisation potentielle d'équipements de chaque satellite, on détermine le nombre (d) de tels intervalles d'utilisation potentielle pour la station, ce nombre étant appelé densité, et on recherche les suites de densités L, L+1, L, où la variation de la densité est due à deux intervalles différents, une commutation L-obligatoire correspondant à une commutation depuis l'intervalle qui se termine quand on passe de la densité L+1 à la densité L, vers un intervalle qui débute.

Dans une réalisation, pour chaque satellite, on établit un graphe d'intervalles, chaque intervalle correspondant à une durée d'utilisation potentielle de ce satellite par une station de base, et on détermine le nombre d'antennes du satellite qui sont utilisées à chaque instant, et on identifie la (ou les) station(s) de base qui ne peut (peuvent) être servie(s) lorsque toutes les antennes du satellite sont mobilisées pour d'autres stations et dans le graphe (ou les graphes) correspondant à cette (ces) station(s) de base, on reporte cette période d'interdiction sur l'intervalle correspondant à ce satellite.

Dans ce cas et lorsqu'on identifie les noeuds L-obligatoires à l'aide d'une suite de densités, on peut pour la (ou les) station(s) de base, dans laquelle (lesquelles) on a reporté une période d'interdiction pour l'intervalle d'utilisation potentielle du satellite correspondant, rechercher à nouveau les suites de densités L+1, L, L+1 afin de déterminer les noeuds L-obligatoires.

Lorsqu'on identifie les commutations L-obligatoires à l'aide de suites de densités, on peut, pour la (ou les) station(s) de base dans laquelle (lesquelles) on a reporté une période d'interdiction pour l'intervalle d'utilisation potentielle du satellite correspondant, rechercher à nouveau les suites de densités L, L+1, L afin de déterminer les commutations L-obligatoires.

Dans une réalisation, la propagation des contraintes des graphes d'intervalles de satellites vers les graphes d'intervalles de stations de base et vice-versa est effectuée jusqu'à ce qu'on ne détecte plus de situation de saturation, c'est-à-dire de satellite ayant, sur un intervalle de temps donné, des stations de base en visibilité qu'il n'utilise pas, mais ayant toutes ses antennes utilisées.

Après avoir établi, pendant le temps de programmation, des liens de communication sans coupure et des liens de communication avec coupure, on peut faire appel à un procédé méta-heuristique pour diminuer (ou annuler) le nombre de liens avec coupure. Dans ce cas, on peut prévoir une étape d'intensification pour la recherche de solution optimales locales et une étape de diversification, les recherches de solutions s'effectuant sur des voisinages plus éloignés lors de l'étape de diversification. De préférence, l'étape d'intensification, par recherche de solutions optimales locales, s'effectue seulement sur les liens avec coupure.

La recherche de diversification peut s'effectuer sur l'ensemble des liens de communication, c'est-à-dire avec coupure et sans coupure.

L'invention concerne aussi, de façon générale, un procédé de planification d'un ensemble N de demandes de services en compétition pour l'attribution de M ressources de caractéristiques identiques, chaque service i devant être rendu de manière continue sur un intervalle de temps $[d_i, f_i]$ inclus dans une période $[0, T]$, les demandes de services étant réparties en groupes et chaque service étant rendu par l'utilisation d'une ressource indifférenciée, les ressources pouvant rendre le service i pendant des intervalles de temps prédéfinis, appelés intervalles d'utilisation potentielle, ces ressources étant réparties en sous-ensembles, une ressource ne pouvant rendre qu'un seul service à la fois et les demandes de services du même groupe ne pouvant pas être rendues par des ressources appartenant au même sous-ensemble, le passage de l'utilisation d'une ressource à la suivante nécessitant l'utilisation simultanée de deux ressources pendant une durée minimale et une ressource relâchée ne pouvant pas être immédiatement réutilisée. Ce procédé est caractérisé en ce que, pour déterminer des séquences de ressources dont l'utilisation garantit au moins deux services continus sur la durée $[0,T]$, on détermine un graphe d'intervalles pour chaque demande de service, chaque noeud étant constitué par un intervalle d'utilisation potentielle d'une ressource et chaque arête étant constituée par une commutation d'une ressource à une autre, et en ce que, pour chaque demande de service, on détermine dans ce graphe les chemins noeuds-disjoints.

D'autres caractéristiques et avantages de l'invention apparaîtront avec la description de certains de ses modes de réalisation, celle-ci étant effectuée en se référant aux dessins ci-annexés sur lesquels :

la figure 1 est un schéma d'un système commun de télécommunication auquel s'applique l'invention,
les figures 2 et 2a sont des graphes pour une station de base illustrant un aspect du procédé conforme à l'invention,
la figure 3 est un graphe pour un satellite illustrant un autre aspect du procédé selon l'invention,
la figure 4 est aussi un graphe pour une station de base illustrant encore un autre aspect de l'invention,
la figure 5 est un diagramme schématique illustrant un procédé méta-heuristique de recherche de solutions,
les figures 6, 6a, 7 et 7a montrent des graphes d'intervalles de stations de base et illustrent un voisinage de recherche locale conforme à l'invention, et
les figures 8, 8a, 9 et 9a montrent des graphes analogues à ceux des figures 6, 6a, 7 et 7a et illustrent un voisinage de recherche de diversification selon l'invention.

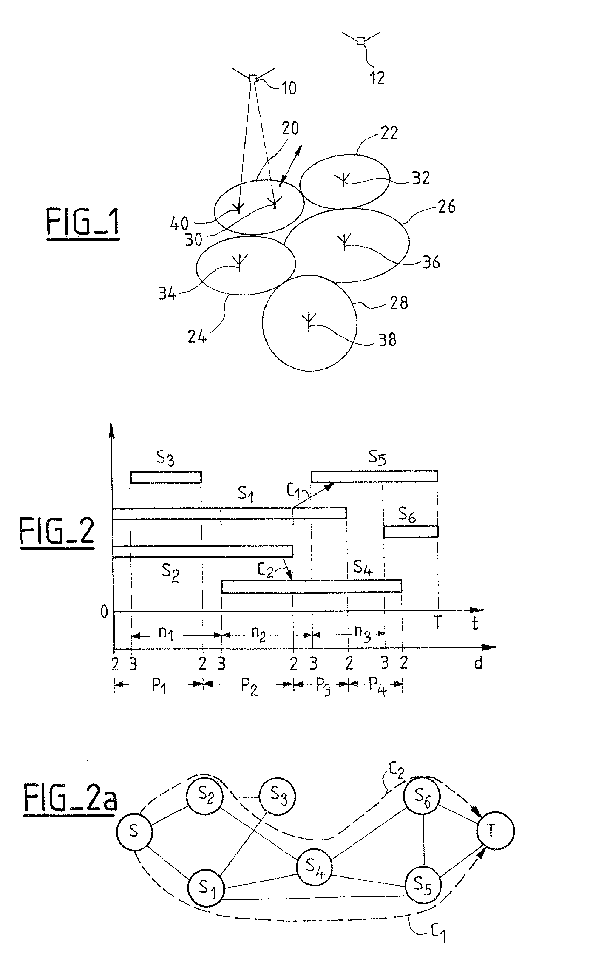

La figure 1 est un schéma d'un système de télécommunication par satellites défilants. Dans le système considéré en exemple (du type Skybridge mentionné ci-dessus), on prévoit un ensemble de satellites 10, 12, etc. à orbite moyenne formant une constellation de Walker de façon à couvrir la plus grande partie du globe terrestre.

La terre est divisée en zones, ou cellules, 20, 22, 24, 26, 28, etc., et dans chacune de ces cellules on prévoit une station de base 30, 32, 34, 36, 38, etc. destinée à relayer toutes les communications émises ou reçues par les divers terminaux se trouvant dans la cellule correspondante. Ces communications transitent par l'intermédiaire d'au moins un satellite 10, 12 vu par la cellule.

Ainsi un terminal 40 de la cellule 20 communiquera avec un autre terminal de la même cellule 20, ou un terminal d'une autre cellule, ou encore d'un autre réseau, en passant d'abord par un satellite, tel que le satellite 10, puis par la station 30, puis ensuite, par le même satellite, ou un autre satellite, vers un autre terminal de la même cellule. Si le terminal destinataire n'appartient pas à la même station que le terminal source, il peut être nécessaire d'effectuer un transfert entre deux stations. La station 30 peut être également reliée à un réseau terrestre, ou autre, d'un autre système de télécommunication.

Dans chaque satellite on prévoit un nombre n d'antennes, par exemple 9 antennes, et chaque antenne est réservée à une seule cellule. En effet les antennes de type actif sont constamment pointées vers la cellule qu'elles desservent, la direction de pointage se déplaçant donc continuellement au fur et mesure que le satellite défile.

Etant donné que dans un système de télécommunication il faut en général qu'il n'y ait pas d'interruption de service on comprend que, lorsqu'un satellite s'apprête à ne plus servir une cellule, par exemple parce qu'il quitte la ligne d'horizon de la cellule, alors qu'une de ses antennes est utilisée pour relayer les communications dans cette cellule, il faut qu'un autre satellite soit prêt à prendre le relais de toutes les communications et que la commutation d'un satellite vers un autre s'effectue alors que celui que l'on s'apprête à ne plus utiliser reste encore utilisable, c'est-à-dire en vue. Ainsi la constellation et les cellules sont telles qu'à chaque instant plusieurs satellites soient en vue de chaque cellule.

En outre le nombre de satellites est suffisant pour permettre qu'à chaque instant, au moins pour certaines cellules, les communications puissent transiter par plusieurs satellites, ce qui permet de satisfaire des trafics importants.

Pour réaliser la commutation d'un satellite vers un autre il faut également tenir compte du temps de ralliement des antennes, c'est-à-dire du temps nécessaire pour qu'une antenne de la station de base et une antenne du satellite soient pointées l'une vers l'autre. Dans un exemple, ce temps est de 10 secondes pour une antenne de satellite et de 20 secondes pour une antenne de station de base.

On comprend que la planification d'un tel système de télécommunication n'est pas un problème simple à résoudre en raison du grand nombre de paramètres qui interviennent, à savoir le nombre de cellules, le nombre de satellites, le nombre d'antennes dans chaque satellite, le nombre d'antennes dans chaque station de base etc. Ces contraintes sont d'autant plus difficiles à satisfaire qu'il est préférable que toutes les communications pour toutes les cellules soient maintenues de façon continue. En effet toute interruption du service même de faible durée entraîne une dégradation du service rendu qui est inadmissible pour certaines communications, par exemple pour la transmission de programmes.

Pour la planification il est étalement préférable de limiter le nombre de commutations d'un satellite vers un autre car une commutation entraîne une utilisation simultanée de deux antennes dans la station de base et de deux satellites. En outre une commutation entraîne un temps de traitement supplémentaire dans la station de base ainsi qu'un trafic de signalisation pour la gestion des liens.

Ainsi la planification consiste à permettre, sur une période de temps donnée, l'établissement de liens logiques continus de préférence pour toutes les cellules. Même s'il n'est pas possible de satisfaire à cette condition pour toutes les cellules, il est préférable de minimiser le nombre de liens pour lesquels il pourrait se produire des interruptions de communications. En outre, la planification doit privilégier les liens logiques qui minimisent le nombre de commutations. On privilégiera aussi, de préférence, l'utilisation de satellites à haute élévation car ceux-ci permettent une meilleure qualité de communication. Il est également préférable de répartir équitablement la charge sur les satellites car il faut éviter de toujours solliciter les mêmes satellites pour garantir l'homogénéité de durée de vie de ces derniers.

Pour réaliser cette planification on effectue une modélisation de l'attribution de liens à partir de chaque station de base, et une modélisation de l'attribution de liens à partir de chaque satellite, ces modélisations étant basées sur des graphes d'intervalles et on effectue une propagation des contraintes entre graphes d'intervalles de stations de base et graphes de satellites. Enfin pour obtenir une ou plusieurs solutions on utilise un procédé méta-heuristique, c'est-à-dire un procédé approché.

La planification consiste à déterminer sur une période de temps déterminée, par exemple 10,5 heures, l'ensemble des liens physiques à établir entre stations de base et satellites pour tout le système de télécommunication. Cette période de temps [0, T] correspond à une période de la constellation de satellites, c'est-à-dire qu'aux instants 0 et T chacun des satellites a exactement la même position à une permutation des numéros des satellites près.

Pour simplifier la solution du problème de planification, comme montré sur les figures 2 et 2a on fait appel tout d'abord à des graphes d'intervalles de stations de base.

Ainsi la figure 2 est un diagramme sur lequel on a porté en abscisses le temps t, et on a représenté au-dessus de cet axe des temps t les durées pendant lesquelles les satellites S1, S2, S3, S4, S5,et S6 sont visibles tant de la station de base que des terminaux. Ces intervalles S1, S2, S3, S4, S5, et S6 sont des intervalles d'utilisation potentielle des équipements à bord de chacun des satellites pour la station de base G1

La figure 2a est un graphe d'intervalles correspondant à la figure 2. Dans un tel graphe chaque intervalle est représenté par un point, S1, S2, ..., S6, appelé noeud. Des arêtes relient deux noeuds quand les intervalles correspondants présentent une durée de chevauchement. On voit ainsi sur la figure 2a qu'une arête $a_{23}$ relie les noeuds S2 et S3 car ceux-ci présentent un intervalle de chevauchement. Par contre, il n'y a pas d'arête entre les noeuds S3 et S6 ni entre les noeuds S3 et S4, et S3 et S5 car l'intervalle S3 ne chevauche aucun des intervalles S4, S5 et S6.

Dans ce graphe la période de début, c'est-à-dire le temps t=0, est noté par un noeud S tandis que l'instant de fin T est noté par un noeud T.

La programmation consiste à déterminer des chemins entre noeuds passant par des arêtes qui permettent de partir du noeud S et d'aboutir au noeud T. Sur la figure 2a on a représenté deux chemins, respectivement C1 et C2 : le chemin C1 part du noeud S pour aboutir au noeud T en passant par les noeuds S1 et S5 tandis que le chemin C2 passe par les noeuds S2, S4 et S6.

Ces chemins C1 et C2 ont été également reportés sur la figure 2 pour montrer la correspondance avec les intervalles.

Pour limiter le nombre de commutations à effectuer, le même créneau de visibilité, c'est-à-dire le même intervalle de temps (ou noeud) S1 S2, S3, S4, S5, S6 ne peut être utilisé qu'une seule fois par une station de base.

Cette contrainte se traduit, dans le graphe de la figure 2a, par le fait qu'il faut rechercher dans un même graphe d'intervalles les chemins de type noeuds-disjoints. Autrement dit quand une même station doit assurer deux, ou davantage, liens logiques au cours de la période [0 T], on choisira des chemins, comme les chemins C1, C2 sur la fig. 2a, qui ne présentent pas de noeuds en communs.

Pour rechercher les L chemins noeuds-disjoints dans un graphe d'intervalles on recherche les connexions (noeuds) ainsi que les commutations (arêtes) L- obligatoires. Les connexions L-obligatoires, que l'on dénommera aussi L-points d'articulation, sont les intervalles (noeuds) obligatoirement empruntés par un des L chemins noeuds-disjoints. Dans le graphe de la figure 2a on voit que les noeuds S2, S4, S6, et S1, S5 sont des L-points d'articulations.

Les commutations L-obligatoires, dénommées aussi L-ponts, sont les commutations utilisées par au moins un des L chemins noeuds-disjoints.

On voit sur le graphe de la figure 2a que les arêtes S2-S4, S4-S6 et S1-S5 constituent des L-ponts.

L'invention fournit un procédé particulièrement simple pour rechercher les L-points d'articulations et les L-ponts.

A cet effet (figure 2), on considère les densités d qui sont les nombres de satellites vus par la station après chaque début et chaque fin d'intervalle.

Ainsi au temps t = 0 la station voit les 2 satellites S1 et S2 et la densité est donc de 2. Après le début de l'intervalle S3 la station voit 3 satellites. Après la fin de l'intervalle S3 la station voit 2 satellites, etc.

Pour déterminer les L-points d'articulations sur cette suite de densités on recherche les suites (L+1, L, L+1). Dans cette suite les L noeuds (ou intervalles) correspondant à la densité intermédiaire L constituent des L-points d'articulations.

Ainsi dans l'exemple de la figure 2 on cherche deux chemins noeuds-disjoints c'est-à-dire-L=2. On voit qu'il existe trois suites de densités (3,2,3) repérées $n_1$, $n_2$ et $n_3$.

A la première suite $n_1$ correspondent les noeuds S1 et S2. A la seconde suite $n_2$ correspondent les noeuds S1 et S4 et à la troisième suite $n_3$ correspondent les noeuds S4 et S5. On a ainsi déterminé les noeuds S1, S2, S4 et S5 comme constituant des noeuds par lesquels passent deux chemins noeuds-disjoints.

Par ailleurs pour déterminer les L-ponts, c'est-à-dire les commutations, ou handovers, obligatoirement effectuées par un des L-chemins noeuds-disjoints on considère aussi la suite des densités et on recherche les suites (L, L+1, L) induites par une commutation et un L-pont correspond à une commutation depuis l'intervalle qui disparaît vers l'intervalle qui apparaît quand on passe de la densité L+1 à la densité L.

On voit sur l'exemple de la figure 2 qu'on peut détecter quatre suites (2,3,2) notées $p_1$, $p_2$, $p_3$ et $p_4$. La suite $P_2$ fournit la commutation, ou arête, S2-S4. La suite $p_3$ fournit la commutation S1-S5 et la suite $p_4$ fournit la commutation S4-S6.

Il est à noter que la première suite (2,3,2), notée $p_1$, ne correspond pas à un L-pont car cette suite est induite par un seul intervalle.

Quand un L-point d'articulation (noeud obligatoirement utilisé) est déterminé on réserve une antenne du satellite correspondant avec un temps minimal d'utilisation.

Quand un L-pont est déterminé, par exemple une arête S2-S4, on interdit pour l'intervalle sortant (S2) toute autre commutation ou arête, c'est-à-dire que l'intervalle S2 ne peut commuter que vers l'intervalle S4 et vers aucun autre.

De même, on interdit pour l'intervalle entrant (S4) toute autre commutation ou arête, c'est-à-dire que seul l'intervalle S2, et aucun autre, peut commuter vers l'intervalle S4.

Pour poursuivre la détermination des liens logiques pour chaque station de base on fait appel à des graphes d'intervalles pour les satellites.

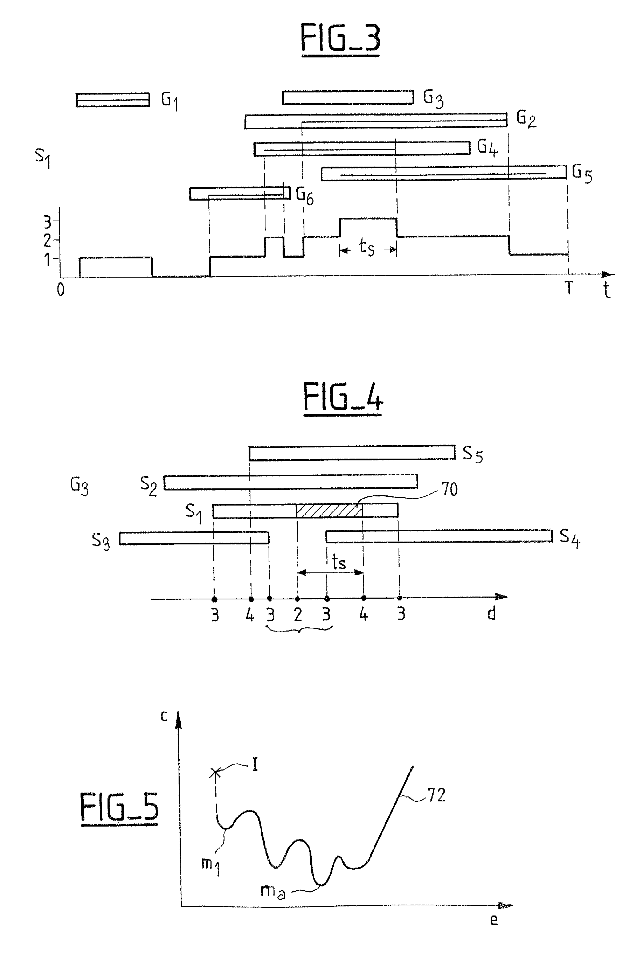

On a représenté sur la figure 3 un graphe d'intervalle pour un satellite S1 avec, en même temps, un profil d'utilisation des antennes de ce satellite.

Dans cet exemple simplifié on a supposé que ce satellite S1 ne comporte que trois antennes.

Sur la période [0 T] le satellite S1 peut servir des stations G1, G2, G3, G4, G5 et G6.

On a également représenté sur la figure 3 le profil d'utilisation du satellite S1, c'est-à-dire le nombre d'antennes utilisées à chaque instant. Ce nombre est égal à 0, 1, 2, ou 3. Lorsque le satellite S1 est en vue de la station G1 une seule antenne est utilisée. Après sa disponibilité pour G1 et avant d'être en vue de G6 aucune station n'est en vue ; le satellite S1 est disponible. Puis la station G6 est visible et une antenne est également réservée. Pour servir ensuite la station G4 on réserve une seconde antenne du satellite S1. Lorsque la station G6 quitte le champ de visibilité du satellite S1 une antenne est libérée qui peut être ensuite utilisée par la station G2. La station G5 est ensuite servie alors que les stations G2 et G4 sont encore en communication avec le satellite S1. Il en résulte que lorsque les stations G2, G4 et G5 sont simultanément servies toutes les ressources du satellite sont mobilisées et celui-ci ne peut donc pas servir la station G3.

Le graphe de la figure 3 est utilisé alors pour modifier le graphe de la station G3 dans lequel on reporte le fait que le satellite S1 n'est pas disponible pendant la durée $t_s$.

Ce graphe pour la station G3 est représenté sur la figure 4. Sur cette figure on a représenté, comme pour la figure 2, les densités.

On voit que l'intervalle d'utilisation potentielle du satellite S1 par la station G3 comporte une zone 70 (figure 4) représentée en traits hachurés, qui correspond à l'intervalle de temps $t_s$ pendant lequel le satellite S1 est inutilisable pour cette station.

Deux liens logiques doivent être établis pour la station G3. Il faut donc détecter la suite des densités (3,2,3). Or, après l'apparition du segment 70 entraînant la mise à jour du graphe d'intervalles de G3, on détecte une telle suite de densités (3,2,3) et donc un 2-point d'articulation. Ainsi, après détermination du segment 70 on constate que les intervalles S2 et S5 peuvent être réservés pour la station G3 alors que ces intervalles S2 et S5 n'étaient pas obligatoires au préalable.

A la suite de cette réservation des noeuds S2 et S5 les profils d'utilisation peuvent être recalculés pour ces deux satellites S2 et S5, ce qui amène à reconsidérer les graphes pour des stations et ainsi de suite.

On effectue en quelque sorte une propagation des contraintes qui se poursuit jusqu'au moment où l'on ne détecte plus aucune saturation.

A la suite de ce traitement, on a ainsi calculé toutes les connexions L-obligatoires et tous les handovers L-obligatoires des graphes d'intervalles de toutes les stations

La technique de propagation des contraintes présente un intérêt non seulement pour la planification initiale du système de télécommunication mais aussi pour un opérateur souhaitant modifier les plans d'allocation de ressources. En effet ce procédé de planification permet de constater rapidement les conséquences des choix des nouvelles allocations.

Quand on a déterminé, pour chaque station de base, l'ensemble des L-points d'articulation et l'ensemble des L-ponts il faut ensuite déterminer l'ensemble des liens permettant de s'approcher de la solution recherchée à savoir, pendant la période de programmation [O T], obtenir une communication continue pour chaque station de base malgré les discontinuités dues au défilement des satellites et du nombre limité d'antennes et de transpondeurs et malgré les diverses contraintes mentionnées ci-dessus.

A cet effet on détermine d'abord une solution initiale, c'est-à-dire une allocation des liens, à l'aide d'un algorithme dit « glouton ».

Cet algorithme consiste à partir d'une liste de liens physiques classés selon un ordre de priorité et à déterminer les commutations (handover) pour ces liens physiques.

A cet effet une modélisation par une recherche de flot maximal dans un réseau à l'instant initial permet de déterminer le plus grand nombre de ces liens physiques. La modélisation par recherche de flot maximal est connue par exemple par l'ouvrage de R.K.AHUJA, T.L. MAGNANTI et J.B. ORLIN , "Network flows. Theory, algorithms and applications." Prentice Hall, 1993.

A la fin de l'exécution de cet algorithme glouton on obtient des liens logiques complets, c'est-à-dire sans interruption de service, et des liens logiques incomplets qui violent la contrainte de continuité de service.

Pour diminuer le nombre des liens logiques incomplets on fait appel, dans un mode de réalisation, à un procédé de meta-heuristique qui comporte une étape dite d'intensification et une étape dite de diversification.

Ces procédés sont connus de façon générale pour déterminer des solutions aux problèmes à grands nombres de variables. Les diverses meta-heuristiques sont décrites dans la revue "Annals of operations research" 63 :73-523,1996, article de I. OSMAN et G. LAPORTE intitulé "Meta-heuristics : a bibliography".

Les procédés meta-heuristiques consistent à se déplacer dans un espace de solutions à l'aide d'un voisinage, c'est-à-dire à rechercher les solutions voisines dans l'espace des solutions, le voisinage étant défini par une modification des caractéristiques des solutions, par exemple à l'aide de la théorie des graphes.

Au cours de l'étape d'intensification on recherche des optima locaux dans l'espace des solutions.

Pour illustrer les procédés de meta-heuristique on peut se reporter au diagramme de la figure 5 sur lequel on a porté, en abscisses, l'espace e des solutions, et en ordonnées, un critère C qui est un critère devant être minimisé pour obtenir une solution. Dans ce diagramme le point I constitue la solution initiale, et l'étape d'intensification consiste à rechercher, à l'aide de voisinages, un minimum local qui serait, dans l'exemple de la courbe 72 de la figure 5, le minimum local $m_1$.

Après la détermination d'un minimum ou optimum local on dégrade les critères de voisinage de façon à échapper aux optima locaux. Il s'agit alors d'une étape de diversification afin de se rapprocher de l'optimum absolu $m_a$, étant entendu qu'il est pratiquement impossible, dans ce type de problème, de prouver qu'on a atteint un tel optimum absolu.

Dans l'exemple, tant pour l'étape d'intensification que pour l'étape de diversification, on fait appel à une recherche par voisinage variable. Cette méthode a été décrite par N. MLADENOVIC et P. HANSEN dans un article intitulé « Variable neighborhood search » dans la revue "Computers Operations Research" 24(11) :1097-1100,1997.

Lors de la recherche par voisinage variable, on détermine des voisinages d'ordre croissant. A partir de la meilleure solution courante, on détermine une solution aléatoire A' en utilisant le premier voisinage et une recherche locale est alors effectuée à partir de cette solution aléatoire. Si la solution A" obtenue par la recherche locale est de meilleure qualité que la meilleure solution A, la recherche par voisinage variable se poursuit en utilisant A" comme solution initiale et en repartant du voisinage de diversification. Dans le cas contraire, l'ordre du voisinage est incrémenté et une autre solution aléatoire est générée à partir de la solution A en utilisant ce nouvel ordre de voisinage jusqu'à ce que tous les voisinages de diversification aient été utilisés.

Pour l'adaptation de la recherche par voisinage variable au présent problème de planification, il faut déterminer l'ensemble des voisinages à utiliser pour les étapes d'intensification et de diversification.

A cet effet, pour l'étape d'intensification, on cherche des solutions meilleures seulement pour les liens incomplets.

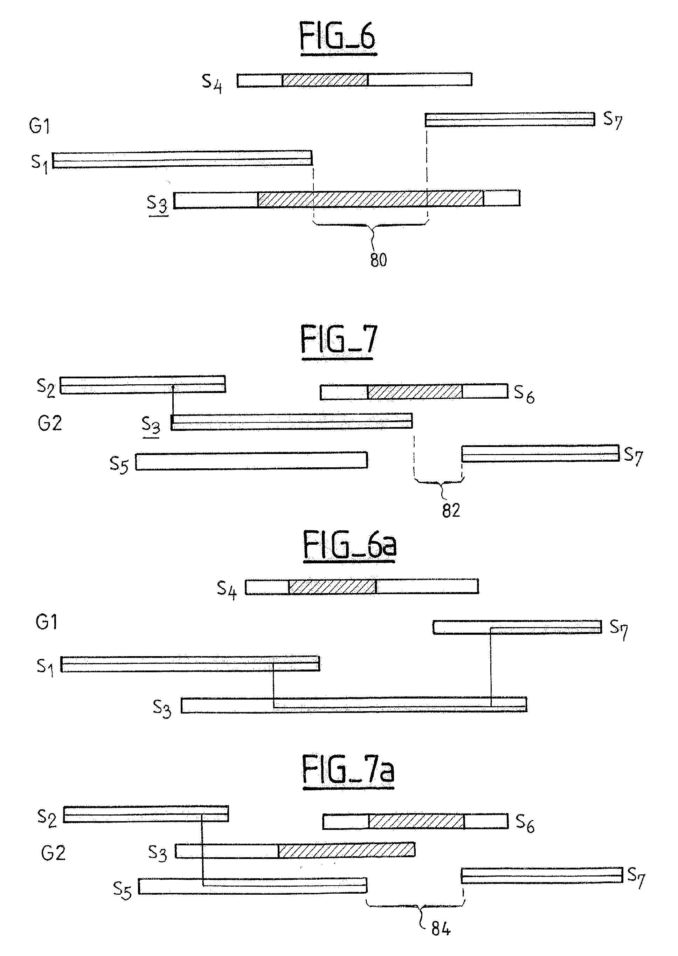

Par exemple, la solution initiale pour les stations de base G1 et G2 est représentée par les figures 6 et 7 respectivement.

On voit que sur la période de programmation, la station G1 comporte une coupure 80, les liens pour les satellites S3 et S4 étant indisponibles pendant leur période de visibilité de la cellule correspondante. Par contre, les intervalles S1 et S7 sont disponibles.

Dans l'exemple représenté sur la figure 7, la station G2 voit, au cours de la période de programmation, les intervalles S2 et S3, S5, S6 et S7, les intervalles S2, S3 et S7 étant utilisés. Cependant, une coupure 82 intervient entre les intervalles S3 et S7, l'intervalle S6 étant indisponible.

Pour cette étape d'intensification, on garde les intervalles S1 pour G1 et S2 pour G2 et on libère des ressources afin de rechercher des liens logiques par une recherche gloutonne.

On obtient ainsi un lien continu S1-S3-S7 pour G1 (figure 6a). Par contre, la recherche gloutonne aboutit, pour G2, à établir les liens S2 et S5 et à utiliser ensuite S7. On obtient donc encore une coupure 84 (figure 7a). On voit ainsi qu'en passant des figures 6 et 7 aux figures 6a et 7a, on a obtenu une amélioration de la solution d'ensemble.

La recherche par voisinage de diversification consiste à autoriser un voisin qui dégrade la solution.

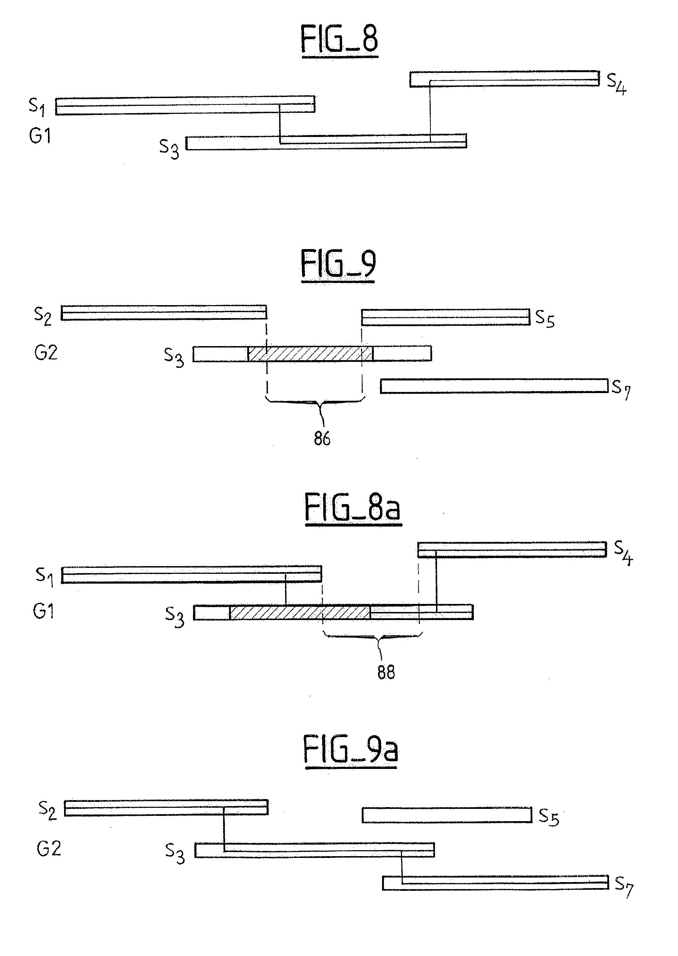

Ainsi, dans un autre exemple très simplifié représenté sur les figures 8 et 9, on part d'une solution dans laquelle, pour la station G1 au départ on dispose d'un lien logique S1-S3-S4 (figure 8) et pour la station G2, le lien logique est incomplet : S2-coupure 86-S5 (figure 9).

Une recherche par voisinage de diversification consiste, tout d'abord, à explorer une solution inadmissible qui est d'utiliser, malgré tout, l'intervalle S3 en dépit de la coupure 86 qui provient du fait que le satellite S3 ne dispose pas d'antenne disponible car toutes ses antennes sont déjà utilisées (situation de saturation). Cette solution est représentée sur la figure 9a où l'on voit que la station G2 utilise les intervalles S2-S3-S7.

Pour rendre cette solution admissible, il faut alors supprimer la violation de contrainte. Dans ces conditions, on génère une coupure 88 (figure 8a) pour le lien logique de la station G1. En effet, l'intervalle S3 est libéré aux dépens de cette station G1.

Pour obtenir une solution de meilleure qualité, il faut de nouveau appliquer une étape d'intensification.

Les procédés de planification décrits ci-dessus constituent des procédés de type général qui peuvent trouver d'autres applications que dans des systèmes de télécommunications.

Ainsi, le procédé de planification conforme à l'invention peut être utilisé pour le contrôle du trafic aérien. En effet, l'espace aérien d'un pays ou d'une région est divisé en secteurs dont chacun dispose de sa station de contrôle. Chaque vol doit passer par des secteurs contigus de façon à être suivi en permanence par une station de contrôle et une telle station ne peut suivre simultanément qu'un nombre limité de vols. Le problème de la recherche de trajectoires pour les vols est similaire au problème d'allocation de liens dans une constellation de satellites. En effet, un vol correspond à une station de base et une station de contrôle correspond à un satellite. Autrement dit, dans le cas du contrôle de trafic aérien, les ressources (stations de contrôle) sont fixes et les demandes de service se déplacent au cours du temps, alors que pour la planification du système de télécommunication, les ressources (satellites) sont mobiles et les demandes de service (stations de base) sont mobiles.

Les procédés décrits s'appliquent également à la gestion de production ou encore à la prise de vue satellitaire.

Cette généralisation résulte du fait que le problème de l'allocation des liens dans la constellation de satellites peut être généralisé en un problème d'allocation de ressources formulé de la façon expliquée ci-dessous, ce problème partant des hypothèses suivantes :

On dispose d'un ensemble de D demandes de service à satisfaire à l'aide d'un ensemble de R ressources de caractéristiques identiques. Chaque demande de service i doit être satisfaite sur un intervalle de temps $\lfloor t_i^o, t_i^f \rfloor$. Les ressources étant indifférenciées, une demande de service peut être satisfaite par n'importe laquelle des ressources.

Les contraintes auxquelles sont soumises les ressources et les demandes de service s'expriment de la façon suivante :

Une ressource ne peut satisfaire qu'une seule demande de service à un instant donné.

Chaque ressource j peut satisfaire la demande de service i sur un ensemble de $k_{ij}$ intervalles de temps

$$\left\{\left[B_{ij}^{k}, E_{ij}^{k}\right]\Big/ k = 1, ..., k_{ij}\right\}$$

Ces intervalles de temps sont des intervalles d'utilisation potentielle. En dehors de ces intervalles de temps, la demande de service i ne peut pas être satisfaite par la ressource j.

Chaque demande de service i doit être continûment satisfaite sur l'intervalle de temps $\llcorner t_i^o, t_i^f \lrcorner$, c'est-à-dire que, pour tout $t \in \llcorner t_i^o, t_i^f \lrcorner$, il faut que la demande de service i soit associée à une ressource j. Comme une ressource ne peut satisfaire une demande de service que pendant des intervalles de temps limités, cette contrainte de continuité de service impose d'utiliser une succession de ressources pour satisfaire la demande de service sur tout l'intervalle $\llcorner t_i^o, t_i^f \lrcorner$.

Les contraintes additionnelles des ressources et demandes de services sont les suivantes :

Le passage d'une ressource à la suivante n'est pas instantané. Il nécessite l'utilisation simultanée des deux ressources pendant une durée de transition donnée.

Une ressource n'est pas immédiatement utilisable après son relâchement par une demande de service. Elle est indisponible pendant une durée de relâchement donnée.

Ainsi, le problème général à résoudre est de satisfaire continûment l'ensemble des demandes de services à l'aide des ressources disponibles.

Pour chaque demande de service i, il faut déterminer une séquence de $N_i$ ressources admissibles. La séquence est constituée de $N_i$ 3-uplets $(b_i^k, e_i^k, j_i^k)$ pour k=1, ..., $N_i$ où $b_i^k$ et $e_i^k$ sont les dates de début et de fin de la k-ième composante du service i rendu par la ressource $j_i^k$. Le nombre de composantes $N_i$ d'une séquence est une variable du problème. Un objectif secondaire du problème est de minimiser le nombre de composantes des séquences.

**Revendications**

1. Procédé de planification des liens de communication, dans un système de télécommunications comprenant une pluralité de cellules (20, 22, etc.) à l'intérieur de chacune desquelles se trouve une station de base (30, 32 , 34, 36 etc.), les communications étant effectuées par l'intermédiaire des stations de base et d'équipements de retransmission se trouvant dans une constellation de satellites (10, 12, etc.), chacun de ces satellites disposant d'une pluralité d'antennes et chacune de ces antennes étant susceptible de rester pointée vers une station de base quand le satellite est en vue de cette dernière, la continuité des communications pour chaque station de base étant assurée par commutation de ces communications de l'équipement d'un satellite vers les équipements d'un autre satellite, **caractérisé en ce que** :

    - pour planifier, sur un temps déterminé, dit temps de programmation, les liens de communication, on utilise des graphes d'intervalles pour les stations de base, chaque noeud ($S_1$, $S_2$) d'un graphe étant un intervalle d'utilisation potentielle d'équipement à bord d'un satellite et chaque arête ($a_{23}$) étant un couple d'intervalles présentant des parties en recouvrement temporel, et

    - dans les graphes pour des stations de base nécessitant un nombre L, au moins égal à deux, de liens de communication par des satellites différents, on détermine ces liens de communication en recherchant L chemins noeuds-disjoints ($C_1$, $C_2$).

2. Procédé selon la revendication 1, **caractérisé en ce que**, pour déterminer les L chemins noeuds-disjoints, dans les graphes d'intervalles pour les stations de base, on identifie les noeuds, appelés L-obligatoires, qui sont obligatoirement empruntés par au moins l'un des L chemins noeuds-disjoints.

3. Procédé selon la revendication 2, **caractérisé en ce que**, pour identifier les noeuds L-obligatoires, pour chaque station de base, après chaque début et chaque fin d'intervalle d'utilisation potentielle d'équipements de chaque satellite, on détermine le nombre (d) de tels intervalles d'utilisation potentielle pour la station, ce nombre étant appelé densité, et **en ce qu'**on recherche les suites de densités de la forme L+1, L, L+1, les noeuds L-obligatoires étant constitués par les intervalles d'utilisation potentielle qui ne se terminent pas ou ne commencent pas quand la densité est L dans cette suite.

4. Procédé selon l'une des revendications 1 à 3, **caractérisé en ce que**, pour déterminer L chemins noeuds-disjoints pour une station de base, on identifie les arêtes, dites commutations L-obligatoires, qui sont obligatoirement empruntées par au moins un des chemins noeuds-disjoints.

5. Procédé selon la revendication 4, **caractérisé en ce que**, pour identifier les commutations L-obligatoires, pour chaque station de base, après chaque début et chaque fin d'intervalle d'utilisation potentielle d'équipements de chaque satellite, on détermine le nombre (d) de tels intervalles d'utilisation potentielle pour la station, ce nombre étant appelé densité, et **en ce qu'**on recherche les suites de densités L, L+1, L, où la variation de la densité est due à deux intervalles différents, une commutation L-obligatoire correspondant à une commutation depuis l'intervalle qui se termine quand on passe de la densité L+1 à la densité L, vers un intervalles qui débute.

6. Procédé selon l'une des revendications précédentes, **caractérisé en ce que**, pour chaque satellite, on établit un graphe d'intervalles (G1 G2, G3), chaque intervalle correspondant à une durée d'utilisation potentielle de ce satellite par une station de base, et **en ce qu'**on détermine le nombre d'antennes du satellite qui sont utilisées à chaque instant, et on identifie la (ou les) station(s) de base (G3) qui ne peut (peuvent) être servie(s) lorsque toutes les antennes du satellite sont mobilisées pour d'autres stations (G2, G4, G5) et dans le graphe (ou les graphes) correspondant à cette (ces) station(s) de base, on reporte cette période d'interdiction (70) sur l'intervalle (S1) correspondant à ce satellite.

7. Procédé selon les revendications 3 et 6, **caractérisé en ce que**, pour la (ou les) station(s) de base (G3), dans laquelle (lesquelles) on a reporté une période d'interdiction pour l'intervalle d'utilisation potentielle du satellite correspondant, on recherche à nouveau les suites de densités L+1, L, L+1 afin de déterminer les noeuds L-obligatoires.

8. Procédé selon les revendications 5 et 6, **caractérisé en ce que**, pour la (ou les) station(s) de base (G3) dans laquelle (lesquelles) on a reporté une période d'interdiction pour l'intervalle d'utilisation potentielle du satellite correspondant, on recherche à nouveau les suites de densités L, L+1, L afin de déterminer les commutations L-obligatoires.

9. Procédé selon l'une des revendications 6 à 8, **caractérisé en ce que** la propagation des contraintes des graphes d'intervalles de satellites vers les graphes d'intervalles de stations de base et vice-versa est effectuée jusqu'à ce qu'on ne détecte plus de situation de saturation, c'est-à-dire de satellite ayant, sur un intervalle de temps donné, des stations de base en visibilité qu'il n'utilise pas, mais ayant toutes ses antennes utilisées.

10. Procédé selon l'une des revendications précédentes, **caractérisé en ce qu'**après avoir établi, pendant le temps de programmation, des liens de communication sans coupure et des liens de communication avec coupure, on fait appel à un procédé méta-heuristique pour diminuer (ou annuler) le nombre de liens avec coupure.

11. Procédé selon la revendication 10, **caractérisé en ce qu'**il comporte une étape d'intensification pour la recherche de solution optimales locales et une étape de diversification, les recherches de solutions s'effectuant sur des voisinages plus éloignés lors de l'étape de diversification.

12. Procédé selon la revendication 11, **caractérisé en ce que** l'étape d'intensification, par recherche de solutions optimales locales, s'effectue seulement sur les liens avec coupure.

13. Procédé selon la revendication 11 ou 12, **caractérisé en ce que** la recherche de diversification s'effectue sur l'ensemble des liens de communication, c'est-à-dire avec coupure et sans coupure.

14. Procédé de planification d'un ensemble N de demandes de services en compétition pour l'attribution de M ressources de caractéristiques identiques, chaque service i devant être rendu de manière continue sur un intervalle de temps $[d_i, f_i]$ inclus dans une période $[0, T]$, les demandes de services étant réparties en groupes et chaque service étant rendu par l'utilisation d'une ressource indifférenciée, les ressources pouvant rendre le service i pendant des intervalles de temps prédéfinis, appelés intervalles d'utilisation potentielle, ces ressources étant réparties en sous-ensembles, une ressource ne pouvant rendre qu'un seul service à la fois et les demandes de services du même groupe ne pouvant pas être rendues par des ressources appartenant au même sous-ensemble, le passage de l'utilisation d'une ressource à la suivante nécessitant l'utilisation simultanée de deux ressources pendant une durée minimale et une ressource relâchée ne pouvant pas être immédiatement réutilisée,
   **caractérisé en ce que**, pour déterminer des séquences de ressources dont l'utilisation garantit au moins deux services continus sur la durée [0,T], on détermine un graphe d'intervalles pour chaque demande de service, chaque noeud étant constitué par un intervalle d'utilisation potentielle d'une ressource et chaque arête étant constituée par une commutation d'une ressource à une autre, et **en ce que** pour chaque demande de service on détermine dans ce graphe les chemins noeuds-disjoints.

FIG_1

FIG_2

FIG_2a

# FIG_3

$S_1$

$G_1$

$G_3$

$G_2$

$G_4$

$G_5$

$G_6$

3
2
1

$t_s$

0

T    t

# FIG_4

$S_5$

$G_3$    $S_2$

70

$S_1$

$S_3$    $S_4$

$t_s$

3   4   3   2   3   4   3    d

# FIG_5

c

I

72

$m_1$

$m_a$

e

## FIG_6

## FIG_7

## FIG_6a

## FIG_7a

## FIG_8

$S_1$
G1
$S_3$
$S_4$

## FIG_9

$S_2$
G2
$S_3$
$S_5$
$S_7$

86

## FIG_8a

$S_1$
G1
$S_3$
$S_4$

88

## FIG_9a

$S_2$
G2
$S_3$
$S_5$
$S_7$

**Office européen des brevets**

**RAPPORT DE RECHERCHE EUROPEENNE**

Numéro de la demande

EP 03 29 0208

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 6 259 913 B1 (GAUDIN ETIENNE ET AL) 10 juillet 2001 (2001-07-10) * colonne 2, ligne 37 - ligne 59; figures 1,2 * --- | 1-14 | H04B7/185 H04Q7/36 |
| A | US 4 912 656 A (CAIN JOSEPH B ET AL) 27 mars 1990 (1990-03-27) * revendications 1-24; figures 1-11 * --- | 1-14 | |
| A | WO 01 26308 A (LAZAR AUREL A ;XBIND INC (US); NANDIKESAN MAHESAN (US)) 12 avril 2001 (2001-04-12) * page 2, ligne 29 - page 3, ligne 26 * --- | 1-14 | |
| A | EP 0 505 092 A (AMERICAN TELEPHONE & TELEGRAPH) 23 septembre 1992 (1992-09-23) * colonne 4, ligne 3 - ligne 21; revendications 1-16 * ----- | 1-14 | |

**DOMAINES TECHNIQUES RECHERCHES (Int.Cl.7)**

H04B
H04Q

Le présent rapport a été établi pour toutes les revendications

| Lieu de la recherche | Date d'achèvement de la recherche | Examinateur |
|---|---|---|
| LA HAYE | 13 mars 2003 | Bischof, J-L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 03 29 0208

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-03-2003

| Document brevet cité au rapport de recherche | | Date de publication | Membre(s) de la famille de brevet(s) | | Date de publication |
|---|---|---|---|---|---|
| US 6259913 | B1 | 10-07-2001 | FR<br>EP | 2782214 A1<br>0978957 A1 | 11-02-2000<br>09-02-2000 |
| US 4912656 | A | 27-03-1990 | AUCUN | | |
| WO 0126308 | A | 12-04-2001 | AU<br>WO | 7867700 A<br>0126308 A2 | 10-05-2001<br>12-04-2001 |
| EP 0505092 | A | 23-09-1992 | US<br>CA<br>CA<br>EP<br>JP | 5640319 A<br>2062107 A1<br>2180966 A1<br>0505092 A2<br>6253019 A | 17-06-1997<br>19-09-1992<br>19-09-1992<br>23-09-1992<br>09-09-1994 |

EPO FORM P0460

Pour tout renseignement concernant cette annexe : voir Journal Officiel de l'Office européen des brevets, No.12/82